# EUROPEAN PATENT APPLICATION

(11) **EP 2 532 716 A1**
(43) Date of publication of application: **12.12.2012**
(21) Application number: 11004770.1
(22) Date of filing: 10.06.2011
(51) Int. Cl.: C09D 4/00

(54) **A substrate having hydrophobic moiety-repelling surface characteristics and process for preparing the same**

(71) Applicant: Eppendorf AG, 22339 Hamburg (DE)
(72) Inventor: Taesler, Christian, 21614 Buxtehude (DE)
(74) Representative: UEXKÜLL & STOLBERG

(57) **Abstract**

The invention relates to a coated substrate comprising (i) a surface and (ii) a coating, said coating comprising a polymerization product of a monomer according to Formula (I) 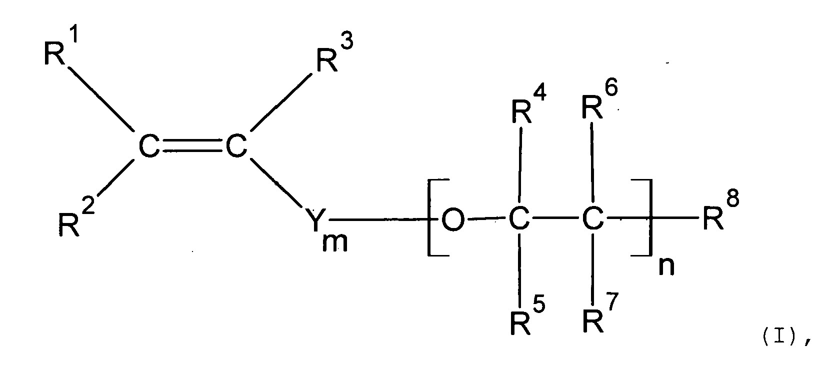 wherein
m = 1 to 4;
n = 1 to 5;
Y represents (CR⁹R¹⁰),
R¹, R², R³, R⁴, R⁵, R⁶, R⁷, R⁹ and R¹⁰ each independently represents: H, OH, halogen, C₁-C₄ alkyl, C₁-C₄ alkenyl, C₁-C₄ alkynyl, C₁-C₄ dienyl, C₁-C₄ alkoxy or C₁-C₄ alkyl halide and R⁸ represents H, halogen, C₁-C₄ alkyl, C₁-C₄ polyhydroxyalkyl or hydroxyalkyl, C₁-C₄ alkenyl, C₁-C₄ dienyl, C₁-C₄ alkynyl, C₁-C₄ haloalkyl, C₁-C₄ aldehyde, C₁-C₄ ketone, C₁-C₄ epoxide, C₁-C₄ carboxylic acid, C₁-C₄ ester, CH=CHR¹¹, where R¹¹ is H, halogen, C₁-C₄ alkyl, C₁-C₄ haloalkyl, C₁-C₄ aldehyde, C₁-C₄ ketone, C₁-C₄ alkoxy, C₁-C₄ epoxide, C₁-C₄ carboxylic acid, or C₁-C₄ ester, or OR¹², where R¹² is C₁-C₄ alkyl, C₁-C₄ alkenyl, C₁-C₄ dienyl, C₁-C₄ alkynyl, C₁-C₄ haloalkyl, C₁-C₄ aldehyde, C₁-C₄ ketone, C₁-C₄ epoxide, C₁-C₄ carboxylic acid, or C₁-C₄ ester.

## Description

The present invention relates to a wide range of substrates such as a vessel for use in the laboratory or in larger scale operations filter media, foams, optical components, fabrics, solar panels, fuel cells, etc. where said substrate comprises a surface and a coating, as well as a process for preparing the coated substrate.

The ability to produce a protein-repelling coating on a substrate surface can have applications in a wide range of industries, including bioconsumables, filter media, foams, optical components, fabrics, solar panels, fuel cells, and in fact, any items that have problems due to protein-binding. Lipid-repelling coatings are of interest in the cosmetic industry, for example, to avoid undesired sticking of hydrophic moities of organic molecules of cosmetic formulations stored or handled in containers having surfaces with an affinity to such hydrophobic moities, e.g. containers based on polyolefin materials. Furthermore, lipid-repelling coatings may serve the purpose of avoiding or reducing migration of ingredients of cosmetic formulations into the packaging material, a process which may negatively affect the mechanical properties of the packaging material.

In particular, for bioconsumables, the preparation and storage of biological samples are the basis for successful experiments and in particular quantitative analyses. When working with low volumes or concentrations, the purity of the sample and recovery after preparation are crucial. In these cases, losses are critical, as they may lead to incorrect or unreliable analytical results.

Working with protein-containing samples presents a specific challenge. Proteins consist of hydrophilic as well as hydrophobic domains, the latter being located on the inside of the globular protein structure in an aqueous environment. If the protein comes into contact with a solid surface of a sample vessel, the three-dimensional protein structure may become modified such that the hydrophobic regions move to the surface of the molecule and seek contact with the hydrophobic surface of the vessel. As a result, proteins in contact with a vessel surface may become immobilised or denatured, or undergo a conformational change, leading to the loss of valuable sample, or, in the case of enzyme solutions, to a reduction in enzyme activity. These undesired effects on the sample increase with decreasing sample volume and concentration.

In general, the following methods have been employed in the laboratory to minimise adsorption of protein sample material:
1) The use of coated (e.g., siliconised) reaction vessels. This may result in leaching of the coating and interference with the sample.
2) The addition of bovine serum albumin (BSA) that will bind primarily to the vessel surface and thus protect the protein sample. However, the high BSA concentrations necessary may have an adverse effect on the precision of pipetting and may also influence further analyses.

US 6,765,069 B2 relates to a method for making a hydrophilic and lubricious coating for implantable medical devices. The coating includes a hydrophilic polymeric unit layer crosslinked with a plasma deposited double bond monomer. Examples for double bond monomers include allyl alcohol. Preferred implantable devices are stents, catheters and pacemakers. Coatings for laboratory vessels are not disclosed in this document.

DE 195 48 152 A1 relates to a method for coating a surface to reduce the interaction with proteins, wherein the surface is exposed to the plasma deposition of an oligomeric ethylene glycol derivative.

US 6,482,531 B1 is directed to the coating of materials by gas phase or plasma polymerisation of a gas containing an organic compound or monomer. Specific substrates are contact lenses. The monomers are characterized by a generic formula which covers in particular vinyl ethers and acrylates of di(ethylene glycol).

When following the teachings of US 6,482,531 B1 and DE 195 48 152 A1, surfaces having a low affinity for proteins can be produced. However, the protein repelling surface characteristics may not be sufficiently stable under a variety of conditions, such as treatment with aqueous solutions of organic solvents (such as acetonitrile/water) and/or heating and pressurizing. This may render the coated surfaces unsuitable for the preparation and storage of biological samples containing proteins in a variety of applications, e.g. laboratoy analytical processes or larger scale operations.

It is therefore an object of the invention to provide for a device such as a vessel for use in the laboratory or on a larger scale, said device having a surface showing protein- or lipid-repelling characteristics which are stable under a variety of conditions.

It has now surprisingly been found that this object can be achieved by the use of a monomer of formula I 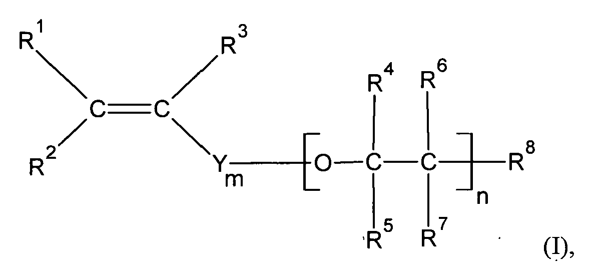 where
m = 1 to 4;
n = 1 to 5;
Y represents (CR⁹R¹⁰),
R¹, R², R³, R⁴, R⁵, R⁶, R⁷, R⁹ and R¹⁰ each independently represents:
   H,
   OH,
   halogen,
   C₁-C₄ alkyl,
   C₁-C₄ alkenyl,
   C₁-C₄ alkynyl,
   C₁-C₄ dienyl,
   C₁-C₄ alkoxy or
   C₁-C₄ haloalkyl and
R⁸ represents
   H,
   halogen,
   C₁-C₄ alkyl,
   C₁-C₄ polyhydroxyalkyl or hydroxyalkyl,
   C₁-C₄ alkenyl,
   C₁-C₄ dienyl,
   C₁-C₄ alkynyl,
   C₁-C₄ haloalkyl,
   C₁-C₄ aldehyde,
   C₁-C₄ ketone,
   C₁-C₄ epoxide,
   C₁-C₄ carboxylic acid,
   C₁-C₄ ester,
   CH=CHR¹¹, where R¹¹ is H, halogen, C₁-C₄ alkyl, C₁-C₄ haloalkyl, C₁-C₄ aldehyde, C₁-C₄ ketone, C₁-C₄ alkoxy, C₁-C₄ epoxide, C₁-C₄ carboxylic acid, or C₁-C₄ ester, or OR¹², where R¹² is C₁-C₄ alkyl, C₁-C₄ alkenyl, C₁-C₄ dienyl, C₁-C₄ alkynyl, C₁-C₄ alkyl halide, C₁-C₄ aldehyde, C₁-C₄ ketone, C₁-C₄ epoxide, C₁-C₄ carboxylic acid, or C₁-C₄ ester to form a polymeric coating on at least a portion of a surface of a device such as a laboratory vessel.

Thus, according to a first aspect, the present invention relates to a coated substrate comprising (i) a surface and (ii) a coating, said coating comprising a polymerisation product of a monomer according to Formula (I).

According to another aspect, the present invention relates to a process for the production of the coated substrate according to the first aspect and as defined in detail herein below, said process comprising:
i. providing a substrate comprising a surface and
ii. coating at least a portion of said substrate surface by means of chemical vapour deposition with a polymer derived from at least one monomer of Formula (I).

Preferred embodiments of the present invention are also disclosed in the dependent claims attached to this description. In one embodiment, the coating of the present invention consists of the various components disclosed herein.

Thus, the monomers of the present invention are based in particular on monoallyl ethers of certain polyols such as in particular glycerol. One or more different monomers can be used to prepare the coating for the laboratory vessel of the present invention. Thus, the present invention also relates to copolymers of one or more of the monomers as defined herein. Also, additional comonomers having a structure other than that defined by Formula (I) can be used, e.g. comonomers for cross-linking. Methods for making the monomers are well-known in the art. The methods for making the coatings according to the present invention are discussed in detail below.

In a group of preferred monomers, R¹ to R⁷, R⁹, R¹⁰ are as defined above and R⁸ is C₁-C₄ polyhydroxyalkyl, e.g. a C₂ dihydroxyalkyl, a C₃ trihydroxyalkyl or a C₄ tetrahydroxyalkyl radical.

In another preferred embodiment of the present invention, R¹, R², R³, R⁹, and R¹⁰ each independently represent H or C₁-C₄ alkyl, m is 1; and R⁴, R⁵, R⁶, R⁷ each independently represent H or OH; and R⁸ represents C₁-C₄ polyhydroxyalkyl or C₁-C₄ hydroxyalkyl, e.g. a C₂ dihydroxyalkyl, a C₃ trihydroxyalkyl or a C₄ tetrahydroxyalkyl radical.

A particularly preferred group of monomers is one where m = 1, each of R¹, R², R³, R⁴, R⁶, R⁹, and R¹⁰ is H; each of R⁵ and R⁷ is OH; and R⁸ is C₁-C₄ polyhydroxyalkyl or hydroxyalkyl, in particular hydroxymethyl.

As noted above, a preferred monomer is the monoallyl ether of glycerol, also known as 3-allyloxy-1,2-propanediol. Other specific polyols which may be used to prepare the monoallyl ether monomers of the present invention are sugar alcohols such as tetroses, pentoses and hexoses, e.g. mannitol or sorbitol.

The coatings formed by the monomers of the present invention are in general obtained by chemical vapour deposition of monomers according to Formula (I) or a mixture of different monomers according to Formula (I). Also, the process of the present invention may comprise the use of cross-linking agents such as 3-(Acryloyloxy)-2-hydroxypropyl methacrylate, 1,3-Butanediol dimethacrylate, 1,4-Butanediol diacrylate, Ethylene glycol diacrylate, Ethylene glycol dimethacrylate, Tetraethylene glycol dimethacrylate, Glycerol dimethacrylate, Pentaerythritol tetraacrylate, 2,4,6-Triallyloxy-1,3,5-triazine, Trimethylolpropane diallyl ether.

Substrates in accordance with the present invention can be bioconsumables, filter media, foams, optical components, cosmetic containers, fabrics, solar panels, fuel cells, and in fact, any items that have problems due to protein- or lipid-binding, *i,e,* binding of hydrophobic moieties. For bioconsumables, it can typically be a vessel for use in the laboratory or on a larger scale, e.g. on a plant scale. A substrate according to the present invention comprises one or more surfaces for coating. Such surface may also be called an operational surface.

As discussed above, lipid-repelling coatings may be used in the cosmetic industry, for example, to avoid undesired sticking of hydrophic moities of organic molecules of cosmetic formulations stored or handled in containers having surfaces with an affinity to such hydrophobic moities, e.g. containers based on polyolefin materials or other materials such as in particular those materials which are described in more detail below.

Typically for bioconsumables, such vessels are used for the storing, handling, sampling, analyzing, collecting, isolating, incubating, transporting or other processing of liquids and fluids containing biological/chemical samples such as proteins. Specific examples for such vessels are given herein below.

Many vessels according to the invention have at least one interior wall which defines a reservoir portion for containing a volume of liquid, and at least one opening in communication with the reservoir portion. According to some embodiments of the invention, a laboratory vessel having an interior wall and an opening is coated on the interior wall and on the area surrounding and forming the opening, with a coating according to the invention. In other embodiments, a vessel according to the invention does not have an interior wall defining a reservoir portion but instead merely comprises a substrate surface partly or completely provided with a coating based on monomers of Formula (I), which coated surface will be in contact with liquids or fluids of interest. For example, such "vessel" according to the present invention may be a microscope slide or a bead.

Particularly preferred vessels are selected from the group consisting of vials, flasks, dishes, test tubes, pipette tips, microcentrifuge tubes, syringes, microscope slides, microscope slide assemblies, sample chambers for analytical devices, tapes, laminates, plates, arrays, multi-titer plates and tubing.

Other preferred vessels are selected from the group consisting of bioreactors and elements thereof, fermentors, cultivation bags, beads, chromatography material; chromatographic carriers, membranes and filters.

Still other preferred vessels are selected from the group consisting a microtitre plate, a microcentrifuge tube, a cell culture consumable, a PCR (Polymerase Chain Reaction) consumable and a dispensing consumable.

Vessel materials may in general comprise plastic or sintered materials, glass, ceramic, metal and primed or pre-coated materials. The invention may also be used on operational surfaces which are porous, smooth, rough, pitted, grooved, cross-hatched, striated, or having patterned physical features.

Preferred examples of suitable materials for the laboratory vessels of the present invention include polyolefins, polyamides, polyesters, silicones, polyurethanes, epoxies, acrylics, polyacrylates, polyesters, polysulfones, poly(meth)acrylates, polycarbonates, PEEK, polyimides, polystyrenes, and fluoropolymers such as PTFE Teflon®, FEP Teflon®, Tefzel®, poly(vinylidene fluoride), PVDF, and perfluoroalkoxy resins. Glass products including silica glass are also used to manufacture laboratory vessels. Ceramic or oxide surfaces can be coated according to the invention. Cellulosic products such as paper and reinforced paper containers can be coated to form coated laboratory vessels according to the invention. Metal surfaces can be coated according to the invention, as can surfaces of glass, silicon, silicon compounds or ceramics that have or have not been primed with silane containing materials or other adhesion promoting materials. Primed metal, primed glass, primed ceramic and primed oxide surfaces can be coated according to embodiments of the invention. Vessel surfaces which have been pre-coated with epoxies, silicones, urethanes, acrylics, or other materials can also be coated according to the invention.

Plastic or glass is often used to manufacture low-cost laboratory vessels. Preferred materials used to manufacture laboratory vessels include polypropylene, polyethylene, polyethyleneterephthalate, polystyrene, polycarbonate and cellulosics. More expensive plastics such as polytetrafluoroethylene and other fluorinated polymers have been used. Because polypropylene is inexpensive and quite hydrophobic itself, it is a particularly preferred material for laboratory vessels, including pipette tips, used for handling and transporting minute and precise amounts of biological sample.

It will be understood that the above materials may comprise additives common in the art. For example, additves for providing antistatic performance are regularly incorporated in plastics such as polypropylene. Accordingly, a reference herein to the above materials such as polypropylene also includes those grades of materials, e.g. polypropylene, which contain those types of additives.

The thickness of the coating prepared in accordance with the present invention is generally in the range of nanometers, e.g. 10 to 300 nm; preferably below 100 nm, e.g. about 50 nm.

Although some wash-off of polymerised coating material or coating monomer might be expected after repeated usage, the coatings of the present invention do not considerably wash off most laboratory vessel surfaces. Little if any wash-off occurs from other vessel materials because of the extremely low solubility in most solvents of the coatings when prepared according to the present invention.

In addition, the following advantages are associated with the use of a coating in accordance with the present invention:
- high resistance against liquid media such as solvents (Without being bound by a specific theory, it is believed that this high resistance is due to the covalent binding (grafting) of the hydrogel functionality to the surface of the device and due to a sufficient degree of cross-linking within the coating.);
- high reproducibility and lack of defects;
- resistance against aging;
- lower costs as compared to monomers known in the art for preparing the same types of coating;
- no risk of contaminating a sample material (due to desorption of coating material from the surface in contact with the sample);
- good transparency since the thickness of the coating is in the nanometer range;
- no specific requirements with regard to the characteristics of the substrate material;
- advantages in biochemical assays: low enzyme/substrate bonding to the coated surface, thereby providing higher sensitivity;
- no need to use BSA as a "protector" in assays: the pipetting procedure is easier to control and less prone to errors;
- no need to use tensides such as Triton X or sodium dodecyl sulfate as "protector" in assays: again the pipetting is easier to control and less prone to errors;
- higher sensitivity in methods directed to protein and/or DNA analysis;
- advantages in the processing and storage of samples of biomolecules (proteins, DNA, RNA etc.), in view of the minimized material losses;
- advantages in cell culture procedures: the cells grow undifferentiated in the medium;
- stable against steam sterilisation and organic solvents (acetonitrile).

The invention also relates to a process for preparing a coated substrate as described above. The process comprises the following steps:
(i) providing a substrate comprising a surface as defined herein above; and
(ii) coating at least a portion of said substrate surface by means of chemical vapour deposition (CVD) with a polymer derived from a monomer according to Formula (I).

In particular, the polymer coatings of the present invention can be prepared by plasma-enhanced chemical vapour deposition (PE-CVD) of a plurality of plasma-polymerizable monomers comprising a monomer of Formula (I) as described hereinabove. Also, the PE-CVD process may comprise the use of multifunctional comonomers for promoting the formation of a more crosslinked structure in order to enhance the stability of the coating against solvents and chemicals. Suitable cross-linking agents are as described hereinabove. Thus, according to one embodiment, the polymerization product of the present invention has a structure comprising cross-linking units.

Other variants of chemical vapour deposition techniques such as hot filament induced CVD using an initiator (iCVD) or CVD enhanced by ultraviolet radiation (UV enhanced CVD) may also suitably be used to prepare the coated substrates of the present invention. With regard to iCVD, usually an initiator species, e.g. tert-butyl peroxide, is introduced together with the monomer of the invention into the vapour phase into a vacuum chamber maintained at a pressure of typically between 0.1 and 1 Torr. An array of filament wires is usually positioned 1 to 4 cm above the substrate to be coated and resistively heated to a temperature typically in the range of 200 to 500°C. The use of suitably low filament temperatures enables the synthesis of polymers with delicate functionalities. The substrate is generally backside cooled to a much lower temperature, typically less than 50°C, to promote adsorption of reactive species. The use of low substrate temperatures is also favourable for the coating of thermal sensitive objects.

Processes for preparing polymers on surfaces by means of plasma polymerization, in particular plasma enhanced chemical vapour deposition are known in the art, and those prior art processes can be used to apply the monomers on a surface of the laboratory vessel according to the invention. Preferred process parameters for PE-CVD are disclosed in e.g. US 6,482,531 B1; US 6,551,950 B1; US 5,853,894 B1;, and DE 195 48 152 A1, which are fully incorporated herein for the purposes of US practice.

More specifically, plasma-enhanced chemical vapour deposition means any method wherein gaseous monomers are attached to the surface of a solid substrate such as an operational surface of a substrate such as a laboratory vessel to form a coating by polymerization and/or grafting of the monomers of the invention directly to the substrate. This includes plasma and photochemical-enhanced polymerizations. Plasma-induced polymerizations or shortly plasma depositions are polymerizations due to the generation of free-radicals caused by passing an electrical discharge through a gas. The electrical discharge can be caused by high-voltage methods, either alternating current or direct current, or by electromagnetic methods such as radio frequency and microwave. Alternatively, a thermally generated plasma may be used.

Precise conditions under which the plasma polymerization takes place in an effective manner will vary depending upon factors such as the nature of the monomer, the substrate etc. The conditions will be determined using routine methods and/or the techniques illustrated in detail in the above-noted prior art. One or more plasma polymerization methods may be used to apply a coating. For example, a combination of a continuous and pulsed plasma polymerization may be used. Also, the process can be performed as a one-step or multi-step gas phase deposition.

In general, the substrate to be treated is placed within a plasma chamber together with the material to be deposited in a gaseous state, a glow discharge is ignited within the chamber and a suitable voltage is applied, which may be pulsed. However, atomisation techniques to deliver monomer into the chamber, such as those described in WO02/28548 (Dow Corning Ireland Ltd), WO2003101621 and WO2003097245 (Surface Innovations Limited), may also be used.

The polymeric coating may be produced under both pulsed and continuous-wave plasma deposition conditions but pulsed plasma may be preferred as this allows closer control of the coating, and so the formation of a more uniform polymeric structure.

As used herein, the expression "in a gaseous state" refers to gases or vapours, either alone or in mixture, as well as aerosols.

Precise conditions under which the plasma polymerization takes place in an effective manner will vary depending upon factors such as the nature of the polymer, the substrate treated and will be determined using routine methods and/or techniques.

Suitable plasmas for use in the method of the invention include non-equilibrium plasmas such as those generated by radiofrequencies (RF), microwaves or direct current (DC). They may operate at atmospheric or sub-atmospheric pressures as known in the art. In particular however, they are generated by radiofrequencies (RF).

Various forms of equipment may be used to generate gaseous plasmas. Generally these comprise containers or plasma chambers in which plasmas may be generated. Particular examples of such equipment are described for instance in WO2005/089961 and WO02/28548, but many other conventional plasma generating apparatus are available.

The gas present within the plasma chamber may comprise a vapour of the monomer alone, but it may be combined with a carrier gas, in particular, an inert gas such as helium or argon, if required. In particular helium is a preferred carrier gas as this can minimise fragmentation of the monomer.

When used as a mixture, the relative amounts of the monomer vapour to carrier gas are suitably determined in accordance with procedures which are conventional in the art. The amount of monomer added will depend to some extent on the nature of the particular monomer being used, the nature of the substrate being treated, the size of the plasma chamber etc. Generally, in the case of conventional chambers, monomer is delivered in an amount of from 50-250 mg/minute, for example at a rate of from 100-150 mg/minute. It will be appreciated however, that the rate will vary depending on the reactor size chosen and the number of substrates required to be processed at once, i. e. at the same time; this in turn depends on considerations such as the annual through-put required and the capital outlay.

Carrier gas such as helium is suitably administered at a constant rate for example at a rate of from 5-90 standard cubic centimetres per minute (sccm), for example from 15-30 sccm. In some instances, the ratio of monomer to carrier gas will be in the range of from 100:0 to 1:100, for instance in the range of from 10:0 to 1:100, and in particular about 1:0 to 1:10. The precise ratio selected will be so as to ensure that the flow rate required by the process is achieved.

In an embodiment of the present invention, a preliminary continuous power plasma may be applied. For example, this type of plasma may be applied for from 15 seconds to 10 minutes, for example from 2-10 minutes within the chamber. This may act as a surface pre-treatment step, ensuring that the monomer attaches itself readily to the surface, so that as polymerisation occurs, the coating "grows" on the surface. The pre-treatment step may be conducted before monomer is introduced into the chamber, in the presence of only an inert gas. In one embodiment, the inert gas comprises argon.

The plasma is then suitably switched to a pulsed plasma to allow polymerisation to proceed, at least when the monomer is present.

In general, a glow discharge is suitably ignited by applying a high frequency voltage, for example at 13.56 MHz. This is applied using electrodes, which may be internal or external to the chamber, but in the case of larger chambers are generally internal.

Suitably the gas, vapour or gas mixture is supplied at a rate of at least 1 standard cubic centimetre per minute (sccm) and preferably in the range of from 1 to 100 sccm.

If a monomer vapour is used, it may suitably be supplied at a rate of from 80-300 mg/minute, for example at about 120 mg/minute depending upon the nature of the monomer, the size of the chamber and the surface area of the product during a particular run whilst the pulsed voltage is applied. It may however, be more appropriate for industrial scale use to have a fixed total monomer delivery so that it is known how much monomer is used in total. This amount will vary with respect to the defined process time and will also depend on the nature of the monomer and the technical effect required.

Gases or vapours may be delivered into the plasma chamber using any conventional method. For example, they may be drawn, injected or pumped into the plasma region. In particular, where a plasma chamber is used, gases or vapours may be drawn into the chamber as a result of a reduction in the pressure within the chamber, caused by use of an evacuating pump, or they may be pumped, sprayed, dripped, electrostatically ionised or injected into the chamber as is common in liquid handling.

Polymerisation is suitably effected using vapours of compounds for example of formula (I), which are maintained at pressures of from 0.1 to 400 mtorr, suitably at about 10-100mtorr. Generally, the monomers of formula (I) are those which have a volatility which is such that the minimum vapour pressures required for the process of the present invention are provided at temperatures below the decomposition temperatures of the monomers.

The applied fields are suitably of power of from 5 to 500 W for example from 20 to 500W, suitably at about 100 W peak power, applied as a continuous or pulsed field. Where used, pulses are suitably applied in a sequence which yields very low average powers, for example in a sequence in which the ratio of the time on : time off is in the range of from 1:100 to 1:1500, for example at about 1:650. Particular examples of such sequence are sequences where power is on for 20-50 µs, for example about 30 µs, and off for from 1000 µs to 30000 µs, in particular about 20000 µs. Typical average powers obtained in this way are 0.1 ― 0.2 W.

The fields are suitably applied from 30 seconds to 90 minutes, preferably from 5 to 60 minutes, depending upon the nature of the compound of formula (I) and the substrates being treated.

Suitably a plasma chamber used is of sufficient volume to accommodate multiple substrates.

A particularly suitable apparatus and method for producing coated substrates in accordance with the invention is described in WO2005/089961, the content of which is hereby incorporated by reference for the purposes of US practice. More specifically, the apparatus comprises a plasma deposition chamber, a pumping system arranged to feed monomer in gaseous form into the chamber, at least two electrodes arranged so as to ignite a plasma within the chamber, and power control means programmed to pulse power supplied to the electrodes so as to produce a plasma at a power of from 0.001 to 500w/m³ within a plasma zone within the chamber.

The pumping system is suitably one which can supply large amounts of vapours into the chamber, and to ensure that this remains in the chamber for the minimum adequate residence time, to achieve the desired effect. It may comprise a series of pumps, and large conductance pipes. The pumping system may also be arranged to draw gas out of the chamber to evacuate air, and/or reduce the pressure, as required.

In a particular embodiment, the pumping system comprises two pumps. A first pump or roots pump, which is suitably a high volume pump, is arranged to evacuate any vapours including water vapour or other contaminants from the chamber. In order to do this efficiently, and in a reasonable timeframe, bearing in mind the size of the chamber, the pump is suitably arranged close to the chamber, and connected to it by way of a single straight pipe, with as large a diameter as possible. A valve is provided in the pipe so that once the chamber has been evacuated, it can be sealed.

A second pump is suitably a lower volume pump, such as a dry-rotary pump. This is suitably connected to the chamber by the same opening as the first pump. It is arranged so that it can draw monomer, together with any carrier gas into the chamber at a suitable rate, and maintain the desired pressure and residence time of gas within the chamber.

The pumping means suitably vents to a furnace where any remaining monomer or fragments therefore, are incinerated before the gases safely pass into the atmosphere.

Preferably the apparatus further comprises heating means for the chamber. These may be integral with the walls of a chamber, or present in a casing surrounding the chamber. They may comprise electrical elements or recirculated, heated oil filled elements, suitably under the control of a temperature controller, to ensure that the desired temperature is maintained within the chamber.

Preferably also the apparatus comprises a container for monomer, which is connected to the chamber by a suitable pipe and valve arrangement. Preferably, this container is provided with a heater, which will allow the monomer to be heated above ambient temperature, if required, before being introduced, into the chamber. Preferably the container, the pipe leading from it to the chamber and the chamber itself are all heated, and the heating means are arranged to produce an increasing temperature gradient along the path of the monomer.

A supply of carrier gas may, if required, be connected to the container and gas from this supply can be passed into the container if required, in order to produce a sufficient flow of gas into the chamber to produce the desired result.

In use, in a batch process, the items to be coated are introduced into the chamber. In a particular embodiment, these are ready made garments, to which a water and/or oil repellent coating is to be applied. By depositing the polymer to the finished garment, rather than to the fabric used in the production, an "all over" coating is achieved, including areas such as zips, fasteners or stitched joints, which would otherwise remain uncoated.

The chamber is then evacuated, for instance using the entire pump suite, but in particular the large roots pump where provided. Once the chamber is evacuated, monomer vapour, which is suitably warmed, is fed into it from the container. This is achieved for instance, by drawing using a second pump from a container in which a supply of liquid monomer is held. This container is suitably heated to a temperature sufficient to cause vaporisation of the monomer.

Preferably also the pipes and conduits which lead from the container to the chamber are also heatable. This means that it is possible to ensure that monomer is not lost through condensation in the feed pipes.

In particular, when using high volume chambers of the type discussed above, the plasma is created with a voltage as a pulsed field, at an average power of from 0.001 to 500 W/m³, for example at from 0.001 to 100 W/m³ and suitably at from 0.005 to 0.5 W/m³.

These conditions are particularly suitable for depositing good quality uniform coatings, in large chambers, for example in chambers where the plasma zone has a volume of greater than 500 cm³, for instance 0.1 m³ or more, such as from 0.5 m³-10m³ and suitably at about 1 m³. The layers formed in this way have good mechanical strength.

The dimensions of the chamber will be selected so as to accommodate the particular substrates being treated. For instance, generally cuboid chambers may be suitable for a wide range of applications, but if necessary, elongate or rectangular chambers may be constructed or indeed cylindrical, or of any other suitable shape.

The chamber may be a sealable container, to allow for batch processes, or it may comprise inlets and outlets for the substrate, to allow it to be utilised in a continuous process as an inline system. In particular in the latter case, the pressure conditions necessary for creating a plasma discharge within the chamber are maintained using high volume pumps, as is conventional for example in a device with a "whistling leak". However it will also be possible to process substrates at atmospheric pressure, or close to, negating the need for "whistling leaks".

The advantages of the present invention will also become apparent from the following examples which are illustrative only and are not to be construed as limiting the scope of the present invention.

### Examples

### Example A: Coating Process

### Plasma Polymerisation of 3-Allyloxy-1,2-propanediol

3-Allyloxy-1,2-propanediol is used as supplied. The plasma deposition experiment is carried out in a plasma chamber of volume 40 litres. Test pieces of suitable size and shape are placed in the chamber and the pressure reduced to 5 mtorr. As a cleaning pre-treatment, argon is introduced to a pressure of 800 mtorr. RF power is then delivered to the chamber via a set of electrodes. A peak power of 100 W with a 10% duty cycle with 10 Hz frequency is applied for 5 minutes. After this stage the chamber is pumped down to < 5 mtorr.

3-Allyloxy-1,2-propanediol vapour is then introduced to the chamber so that it reaches a pressure of 40 mtorr. 200 W RF power is applied for 5 minutes. For the next stage, the pressure conditions of the monomer are kept the same, but the power is now pulsed so a polymer is grown on the surface of the substrate with good retention of the monomer properties, i.e. those properties which are based on the functional groups and moieties of the monomers present in the monomer, which the functional groups and moieties are not consumed in the polymerization reaction. The peak power is 75 W and the on time of the pulse is 50 µs, and the off time is 20 ms. This pulsed plasma is applied for 60 minutes.

At the end of the process, the RF power is turned off, the chamber is pumped down to < 5 mtorr and then vented to atmosphere. The coated sample is then removed from the chamber.

### Example B: Assay for Testing the Protein Repelling Effect

The experimental data shown below were obtained by using the following assay.

### 1. Basic operations

### 1.1. Marking of proteins using Iodine-131 (I-131)

Proteins:
Bovine Albumine (Sigma), Initial Fractionation by Cold Alcohol Precipitation, Approx. 99 %.;
Cytochrome C from bovine heart, Sigma;
Fibrinogen from bovine plasma, Fraction I, Type I-S, Sigma;
IgG from bovine serum, Sigma.

Reagents:
Chloramine T, 2 mg/ml
Na₂S₂O₅, 3 mg/ml
NaCl, 9 mg/ml (physiological)
Tris/HCl 0.1 M, pH 7.5
Protein solution in NaCl

Activity:
74 MBq Na131I starting activity (Amersham). Addition of 1.4 ml Tris buffer. Total volume ca. 2.0 ml.

Procedure:
Starting from 200 µl activity; addition of
   500 µl Tris buffer;
   500 µl protein solution, carefully weighed;
   200 µl Chloramine T;
5 minutes of swaying;
addition of 200 µl Na₂S₂O₅;
1 minute of swaying.

### 1.2. Determination of the specific counting rate of the reaction mixture

20 µl reaction mixture are placed in a vial and weighed carefully. The counting rate is determined in a gamma counter (Cobra, Canberra-Packard). Measuring time: 10 minutes.

### 1.3. Determination of the marking yield

A small drop of reaction mixture is placed on a thin layer chromatography (tlc) plate (Polygram CEL 300, Macherey-Nagel) and chromatographed using methanol : water (85:15). The protein remains at the starting line, whereas free iodide travels with nearly the flow rate of the eluent. The ratio of the activities is determined using a autoradiographic method (PhosphorImager, Molecular Dynamics).

### 1.4. Cleaning of the proteins

A gel permeation column (PD-10, Amersham Pharmacia Biotech, filled with Sephadex G-25) is conditioned using 25 ml Tris buffer. The reaction mixture is placed on the column, and the eluate is discarded. Further 1 ml of Tris buffer is added, and the eluate is again discarded. After addition of further 3 ml Tris buffer, the eluate is collected ("cleaned protein solution").

### 1.5. Determination of the specific counting rates of the cleaned protein solution

50 µl of reaction mixture are placed in a vial and weighed carefully. The counting rate is determined in a gamma counter (Cobra, Canberra-Packard). Measuring time: 10 minutes.

### 1.6. Determination of the protein proportion of the counting rate after cleaning

The cleaned protein solution still contains a small amount of free active iodide. A small drop of cleaned protein solution is placed on a tlc plate and chromatographed using methanol: water (85:15). The protein remains at the starting line whereas free iodide travels with nearly the flow rate of the eluent. The ratio of the activities is determined using a autoradiographic method (PhosphorImager, Molecular Dynamics).

### 1.7. Setting the concentration of protein at 1 µg/g

The following information is necessary so that the concentration of the protein solution can be brought to the desired value of 1 µg/g:
- specific counting rate of the reaction mixture;
- marking yield;
- specific counting rate of the cleaned protein solution;
- protein proportion of the counting rate after cleaning.

Dilution can therefore only be effected once the results of the autoradiographic analysis and the gamma counter are available.

### 1.8. Preparation of the vials

The projecting parts of the lid must be cut off so that the vial fits into the borehole geometry of the gamma counter. Likewise, the connection between the lid and the vial must be removed. The resulting difficulties when opening the vial are not substantial. The removal of the projecting parts must take place before filling the vial because upon agitation drops would be released from the surface of the liquid and would contaminate those parts of the vial which should not be wetted.

### 1.9. Filling the vials

The vial can be adjusted in height using a raising and lowering mechanism. It is filled using a multipette (Eppendorf). Care must be taken when filling: Areas above the normal liquid level can be wetted if the liquid shoots too quickly out of the opening of the pipette tip.

### 1.10. Measuring the counting rate

The vials of each series are brought together in the gamma counter. Measuring is stopped as soon as the counting error is below 0.1 % on the required measuring time has been reached.

### 1.11. Controlled emptying of the vials

The liquid is siphoned off using a peristaltic pump. A yellow Eppendorf pipette tip is placed on the tube. The tip is fastened in downward position. The pump mechanism ensures that the depth of immersion is kept at 2-3 mm. One finally touches the bottom of the vial several times with the pipette tip to remove any liquid residue which can be mechanically caught.

### 1.12. Steps of a measuring series

The following steps were initially performed for a series of vials:
- preparation of the vials
- filling with 500 µl of cleaned protein solution
- 24 h waiting time
- determination of the gamma counting rate
- emptying of the vials and refilling with 500 µl Tris buffer
- emptying of the vials and refilling with 500 µl Tris buffer
- 24 h waiting time
- determination of the gamma counting rate
- emptying of the vials
- determination of the gamma counting rate.

This corresponds to the procedure which was followed in nearly all of the above measurements. Subsequently, a shortened procedure was followed for the following series since the in-between step after the first emptying was considered to provide little information.
- preparation of the vials
- filling with 500 µl of cleaned protein solution
- 24 h waiting time
- determination of the gamma counting rate
- emptying of the vials and refilling with 500 µl Tris buffer
- emptying of the vials
- determination of the income accounting rate.

When using vials having a filling volume of 2 ml, 1000 µl of liquid were used, in variation from the above described procedure.

### 1.13. Determination of the wetted surface

The measurements were made using three vials differing in size. The wetted surface therefore depends on the type:

Vials having a size of 500 µl are considered to be a combination of hemisphere and two frusta. A content of 500 µl corresponds to the following dimensions:
sphere diameter = small frustum 1 diameter = 3 mm
large frustum 1 diameter = small frustum2 diameter = 6 mm
length of the frustum 1 mantle = 12 mm
large frustum2 diameter = 6.4 mm
length of frustum2 mantle = 9.6 mm
total volume: 500.4 µl
total wetted surface: 370.8 mm².

The vials having a volume of 1 ml are considered to be a combination of a hemisphere, a frustum and a cylinder. The following dimensions correspond to a content of 500 µl:
sphere diameter = small frustum diameter = 4 mm
large frustum diameter = 8 mm
length of the frustum mantle = 16 mm
The cylinder-shaped part is not wetted at 500 µl.
total volume: 499.0 µl
total wetted surface: 326.7 mm².

Vials having a volume of 2 ml are considered to be a combination of a hemisphere and a cylinder. The following dimensions correspond to a content of 1000 µl:
sphere diameter = cylinder diameter = 8.5 mm
height cylinder = 12.6 mm
total volume: 1037 µl
total wetted surface: 450.0 mm²

### 1.14. Characterisation of a monolayer

Dimension of a protein molecule: 3.55 nm Stokes radius (as sphere) having a volume of 187 nm³. A cube having the same volume has a side length of 5.7 nm and base of 33 nm².

At a content of 500 µl, the wetted surface of a vial having a volume of 500 µl is 371 mm² or 371 * 10¹² nm². That is, a monolayer corresponds to 1.13 * 10¹³ molecules.

At a content of 500 µl, the wetted surface of a vial having a volume of 1 ml is 327 mm² or 327 * 10¹² nm². That is, a monolayer corresponds to 9.98 * 10¹² molecules.

At a content of 1 ml, the wetted surface of a vial having a volume of 2 ml is 450 mm² or 450 * 10¹² nm². That is, a monolayer corresponds to 1.37 * 10¹³ molecules.
These values are a rough estimate.

### 1.15. Measurements with wells

A part of the samples consisted of sawn-up wells for which analogous measurements were to be made. Because of the size of the wells, the gamma counter "Cobra" could not be used. Instead, a device had to be used where all operations had to be performed manually. It turned out that the dimensions of the wells varied. Also, variations in the counting yield where encountered. Therefore, the counting rates were not put down to the number of monolayers. The results may be associated with an error in the magnitude of 50% of the measured value. The method described under 1.12 was followed. 1000 µl of liquid were used, respectively.

### 2. Results

The coverage is determined as counting rate and as the number of monolayers. The latter allows a comparison with earlier measurements and takes the differing wetted surface of the three types of vials into account. In addition, the activity of the protein solution is only partly localised on the protein. A small part (typically 7%) is present as free iodide, despite the cleaning by gel permeation chromatography. The proteins were marked in individual experiments. Therefore, a monolayer corresponds to an individual counting rate.

In the following results, the contact time was always 24 h, and the concentration of the proteins was 1 µg/ml. The experiments were performed with the proteins BSA, IgG, fibrinogen and cytochrome C.

The results given in the following table report the loss of protein in %, as obtained from a comparison of the coverages determined in accordance with the assay described above.

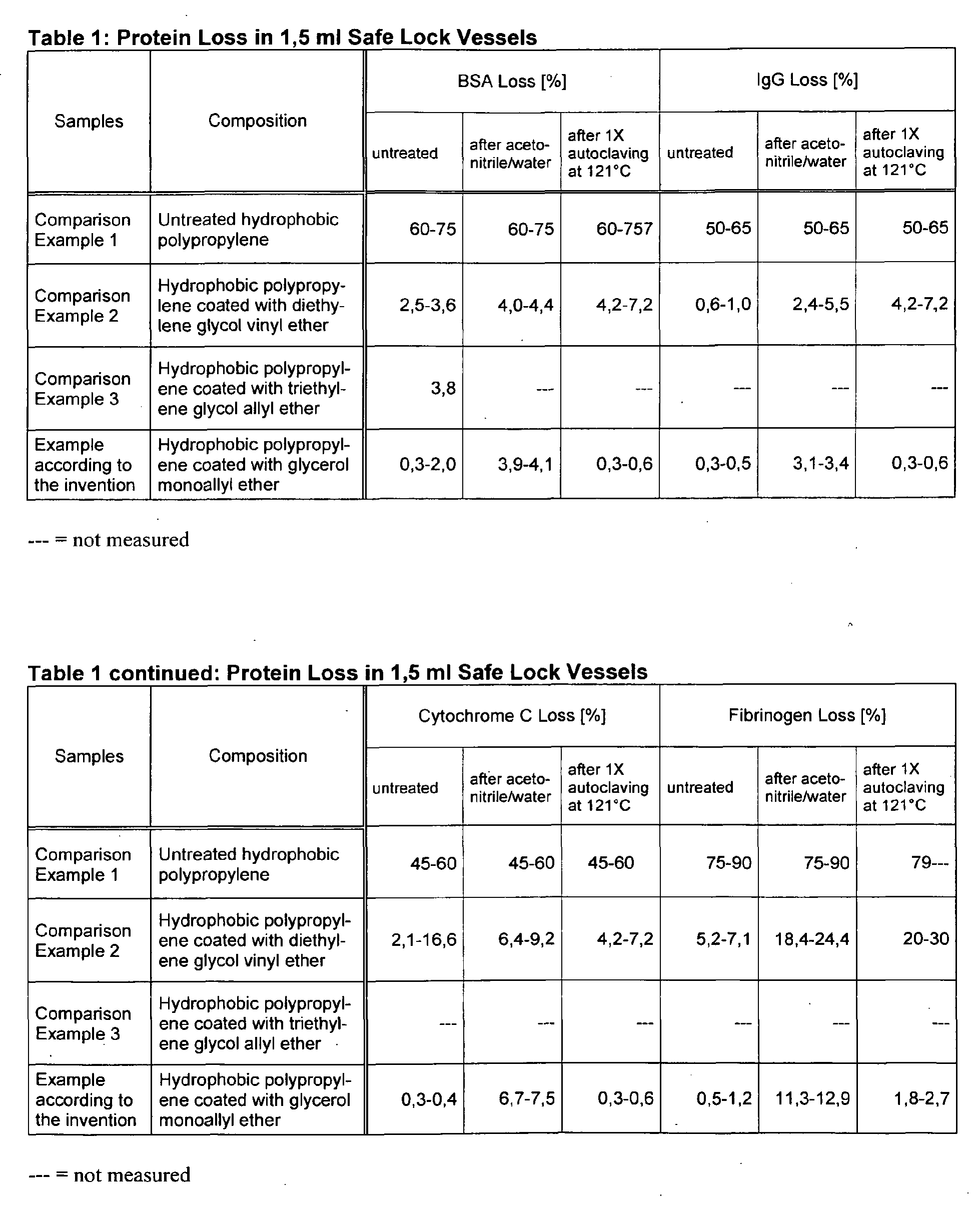

Comparison Examples 2 and 3 are vessels prepared in accordance with the teachings of DE 195 48 152 A1 and US 6,482,531 B1, respectively. Example 1 represents a vessel prepared in accordance with the teaching of the present invention using the monoallyl ether of glycerol as the monomer. The data in the table shows that protein loss is significantly reduced when using a coating in accordance with the present invention. This applies in particular to protein losses measured after the vessel had been subjected to contacting with acetonitrile/water or autoclaving at higher temperatures.

## Claims

1. A coated substrate comprising (i) a surface and (ii) a coating, said coating comprising a polymerization product of a monomer according to Formula (I) 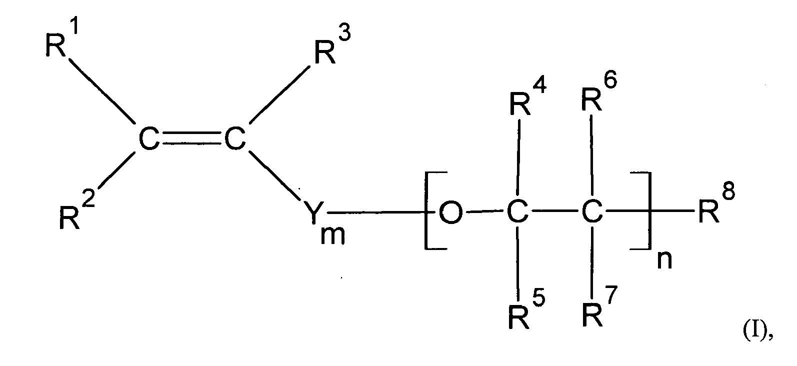 wherein
m = 1 to 4;
n = 1 to 5;
Y represents (CR⁹R¹⁰),
R¹, R², R³, R⁴, R⁵, R⁶, R⁷, R⁹ and R¹⁰ each independently represents:
H,
OH,
halogen,
C₁-C₄ alkyl,
C₁-C₄ alkenyl,
C₁-C₄ alkynyl
C₁-C₄ dienyl,
C₁-C₄ alkoxy or
C₁-C₄ alkyl halide and
R⁸ represents
H,
halogen,
C₁-C₄ alkyl,
C₁-C₄ polyhydroxyalkyl or hydroxyalkyl,
C₁-C₄ alkenyl,
C₁-C₄ dienyl,
C₁-C₄ alkynyl,
C₁-C₄ haloalkyl,
C₁-C₄ aldehyde,
C₁-C₄ ketone,
C₁-C₄ epoxide,
C₁-C₄ carboxylic acid,
C₁-C₄ ester,
CH=CHR¹¹, where R¹¹ is H, halogen, C₁-C₄ alkyl, C₁-C₄ haloalkyl, C₁-C₄ aldehyde, C₁-C₄ ketone, C₁-C₄ alkoxy, C₁-C₄ epoxide, C₁-C₄ carboxylic acid, or C₁-C₄ ester, or OR¹², where R1² is C₁-C₄ alkyl, C₁-C₄ alkenyl, C₁-C₄ dienyl, C₁-C₄ alkynyl, C₁-C₄ haloalkyl, C₁-C₄ aldehyde, C₁-C₄ ketone, C₁-C₄ epoxide, C₁-C₄ carboxylic acid, or C₁-C₄ ester.

2. A coated substrate according to claim 1, wherein R¹, R², R³, R⁹, and R¹⁰ each independently represent H or C₁-C₄ alkyl; m is 1; and R⁴, R⁵, R⁶, R⁷ each independently represent H or OH; and R⁸ represents C₁-C₄ polyhydroxyalkyl or C₁-C₄ hydroxyalkyl.

3. A coated substrate according to claim 2, wherein the monomer is glycerol monoallyl ether.

4. A coated substrate according to any one of claims 1 to 3, wherein the coating comprises the polymerization product of at least two different monomers according to Formula (I).

5. A coated substrate according to any one of claims 1 to 4, wherein the coating comprises units derived from a comonomer effecting cross-linking.

6. A coated substrate according to any one of the preceding claims wherein the polymerization product is formed by chemical vapour deposition (CVD), in particular plasma enhanced CVD.

7. A coated substrate according to any one of the preceding claims wherein the substrate comprises a material selected from the group consisting of plastics, sintered materials, glass, ceramics, metals, filter media, surface finishes, primed and pre-coated materials.

8. A coated substrate according to claim 7 wherein the plastic is selected from the group consisting of polyolefins, polyamides, polyesters, silicones, polyurethanes, epoxies, acrylics, polyacrylates, polyesters, polysulfones, polyether-ketones, liquid crystalline polymers (LCP), poly(meth)-acrylates, polycarbonates, polyimides, polystyrenes (styrenics), vinylics, thermoplastic elastomers (TPE)and fluoropolymers.

9. A coated substrate according to claim 8 wherein the polyolefin is selected from the group consisting of polymers or copolymers of ethylene and propylene.

10. A coated substrate according to claim 7 wherein the glass is silica glass.

11. A coated substrate according to any of the preceding claims, wherein said substrate is selected from the group consisting of vials, flasks, dishes, test tubes, pipette tips, microcentrifuge tubes, syringes, microscope slides, microscope slide assemblies, sample chambers for analytical devices, tapes, laminates, plates, arrays, multi-titer plates and tubing.

12. A coated substrate according to any of the preceding claims, wherein said substrate is selected from the group consisting of bioreactors and elements thereof, fermentors, cultivation bags, beads, chromatography material; chromatographic carriers, membranes, and filters.

13. A coated substrate according to any of the preceding claims, wherein said substrate is selected from the group consisting of a microtitre plate, a microcentrifuge tube, a cell culture consumable, a PCR consumable and a dispensing consumable.

14. A process for the production of a coated substrate as defined in any of the preceding claims, said process comprising:
(i) providing a substrate comprising a surface; and
(ii) coating at least a portion of said substrate surface by means of chemical vapour deposition of a monomer of Formula (I).

15. Process according to claim 14, wherein the polymerization is conducted by plasma enhanced chemical vapour deposition.

16. Process according to claim 15, wherein a combination of plasma techniques is used.

17. Process according to any one of claims 14 to 16, wherein at least two different monomers according to Formula (I) are used.

18. Process according to any one of claims 14 to 16, wherein said process comprises the deposition of comonomers, in particular cross-linking agents.

19. Process according to any one of claims 14 to 18, wherein the chemical vapour deposition includes cross-linking and/or grafting of the monomers of Formula (I) to a surface of the substrate .
